(19) Europäisches Patentamt
European Patent Office
Office européen des brevets

(11) EP 3 185 050 A1

(12) EUROPEAN PATENT APPLICATION

(43) Date of publication:
**28.06.2017 Bulletin 2017/26**

(51) Int Cl.:
***G02B 1/111** (2015.01)*

(21) Application number: **15307122.0**

(22) Date of filing: **23.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Essilor International (Compagnie Générale d'Optique)**
**94220 Charenton-le-Pont (FR)**

(72) Inventors:
- **BOLSHAKOV, Ilya**
  **DALLAS, TX75234 (US)**
- **SCHERER, Karin**
  **94220 CHARENTON LE PONT (FR)**

(74) Representative: **Jacobacci Coralis Harle**
**14-16, rue Ballu**
**75009 Paris (FR)**

# (54) OPTICAL ARTICLE COMPRISING A MULTILAYERED INTERFERENTIAL COATING OBTAINED FROM AN ORGANIC PRECURSOR OR A MIXTURE OF ORGANIC PRECURSORS

(57) This invention relates to an optical article comprising a transparent substrate with a front main face and with a rear main face, at least one of the main faces being coated with a multilayered interferential coating comprising at least one layer having a high refractive index (HI layer) and at least one layer having a low refractive index (LI layer), said at least two layers being formed by:
- depositing one organic precursor or a mixture of organic precursors by vacuum physical vapor deposition under a beam of ionized gas composition,
o wherein the ionized gas composition is different during each deposition step of said at least two layers of the multilayered interferential coating, and,
o wherein said depositing is implemented in absence of evaporated inorganic precursors,

so that the refractive index difference between the HI layer and the LI layer is at least 0.1.

EP 3 185 050 A1

**Description**

## FIELD OF THE INVENTION

The present invention generally relates to an optical article, especially an ophthalmic lens, possessing a multilayered interferential coating such as an antireflection coating and optionally an anti-abrasion coating, said coatings being obtained from one organic precursor or a mixture of organic precursor, preferably one organic precursor, the optical properties of which are stable over time, and which furthermore possesses improved mechanical properties, and to a process for producing such an article.

## DESCRIPTION OF RELATED ART

Generally, a transparent optical article such as ophthalmic lens comprises a substrate on which different functionalized coatings may be deposited.

Especially, this substrate is an organic lens substrate made of thermoplastic or thermosetting plastic material.. However, these materials have the disadvantage of being soft and therefore, can easily scratch.

That is why, it is common to coat this lens substrate with an anti-abrasion coating and/or scratch-resistant coating (hard coat). These hard coatings are preferably based on poly(meth)acrylates or silanes, generally comprising one or more mineral fillers intended to increase the hardness and/or the refractive index of the coating once cured.. Antireflective coating may be applied to the above hard coated lens.

Indeed, it is known to treat ophthalmic lenses, whether inorganic or organic, so as to prevent the formation of annoying interfering reflections for the wearer of the lens and his or her interlocutors. In such a case, the lens is provided with a monolayer or multilayer antireflection coating, generally of mineral material.

In particular, a multilayer antireflection coating is formed by alternating layers of dielectric materials having high refractive index (named hereafter HI layer) and low refractive index (named hereafter LI layer), that will produce interferential coating which will reduce reflectance and at the same time increase transmittance. HI layer is traditionally made of one or more metal oxides, such as zirconia ($ZrO_2$) titanium dioxide ($TiO_2$) alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), lanthanum oxide ($La_2O_3$), niobium oxide ($Nb_2O_5$), yttrium oxide ($Y_2O_3$); whereas LI layer may comprise $SiO_2$, or a mixture of silica and alumina.

One issue of concern for all types of mineral interference coatings is their fragility mainly due to their inorganic nature. These coatings can hardly be subjected to significant deformation or expansion, because the stress experienced often results in a cracking that propagates over the entire surface of the coating, making it generally unusable. Thus, entirely inorganic nature interference coatings tend to crack, even for low deformation rates, for example in the range of 1 % or below.

Thus, during the edging and fitting of an eyeglass by an optician, the eyeglass undergoes mechanical deformations that may produce cracks in mineral interference coatings, in particular when the operation is not carried out with care. Similarly, thermal stresses (heating of the frame) may produce cracks in the interference coating. Depending on the number and the size of the cracks, the latter may mar the field of view of the wearer and prevent the eyeglass from being sold. Furthermore, while the treated organic eyeglasses are being worn, scratches may appear. In mineral interference coatings, certain scratches lead to cracking, making the scratches more visible because of scattering of light.

Moreover, due to different thermo-mechanical properties of the lens substrate, the hard coat and the antireflective coating, an ophthalmic lens comprising such a structure could also craze during mechanical or thermo-mechanical load, i.e.: during the edging and the fitting of the ophthalmic lens.

Different solutions have been proposed in the prior art for resolving the above mentioned problems.

EP1306695, EP1433809 describe the co-evaporation of an inorganic precursors such as inorganic oxides including $SiO_2$.

WO2015/166144 discloses an optical article comprising a substrate which may be coated with an antireflective coating comprising one layer A of a material obtained from vacuum deposition, assisted by an ion source, of at least one titan oxide and at least one organosilicon compound B. The material has a refractive index at 550 nm equal or higher than 1.8 and may be therefore a HI layer. The other HI layers and/or LI layers of the antireflective coating may be made with the above-mentioned traditional inorganic material.

However, those documents requires the use of at least two different materials for forming the layers of the interferential stack and at least two different materials for forming the high and the low refractive index layers. Thus, the optical article is obtained from a process which requires several different materials and it is therefore not so easy to implement.

Therefore, there is still a need to provide a novel optical article comprising a substrate coated with a multilayered coating, such an antireflective coating and optionally a hard coat, which has a reduced weakness linked to the use of interferential coating minerals and of soft substrate, and which has an improved crazing and/or cracking resistance.

There is also still a need to provide a novel method of manufacturing of said optical article comprising a hard coat and/or a multilayered coating, such an antireflective coating, which is simple, easy to implement and reproducible.

Thus, another objective of the invention is preferably to obtain a coating, especially an interference coating, and in particular an antireflection coating, having improved thermomechanical properties, while preserving good adhesive properties, the coating moreover developing no (or almost no) cosmetic defects over time. In particular, the invention relates to optical articles possessing an improved critical temperature, i.e. having a good resistance to cracking when they are subjected to a temperature increase.

## SUMMARY OF THE INVENTION

Specifically, the inventors have discovered that modifying the experimental conditions during the deposition step of a multilayered interferential coating obtained from at least one organic precursor formed by vacuum physical vapor deposition under a beam of ionized gas composition, and especially modifying only the nature of the ionized gas composition, enables to obtain in an easy manner an appropriate interference coating, and especially an appropriate antireflective coating comprising alternate HI and LI layers.

Indeed, the inventors have found that from at least one organic precursor, such as octamethylcyclotetrasiloxane (OMCTS) and by modifying only the ionized gas, for instance by using argon for forming HI layer and oxygen for forming LI layer, during the deposition step, it is possible to form an antireflective coating having an improved critical temperature, low absorption, a reduced weakness to crazing and/or cracking, while having excellent antireflective properties and while being easy to implement.

The targeted aims are therefore achieved according to the invention by an optical article comprising a transparent substrate with a front main face and with a rear main face, at least one of the main faces being coated with a multilayered interferential coating comprising at least one layer having a high refractive index (HI layer) and at least one layer having a low refractive index (LI layer), said at least two layers being formed by:

- depositing one organic precursor or a mixture of organic precursors by vacuum physical vapor deposition under a beam of ionized gas composition,

  o wherein the ionized gas composition is different during each deposition step of said at least two layers of the multilayered interferential coating, and,
  o wherein said depositing is implemented in absence of evaporated inorganic precursors,

  so that the refractive index difference between the HI layer and the LI layer is at least 0.1.

Therefore, the invention offers the advantage of requiring for instance only one organic precursor so as to deposit the different HI layers and LI layers of the multilayered interferential coating. Hence, the number of materials used for the manufacture of a multilayered interferential coating is reduced, compared to the conventional process of the prior art.

Another advantage is that it is not necessary to use an electron gun conventionally used for evaporation of inorganic materials.

In addition and as it will be explained below, an anti-abrasion coating could also be formed by using the deposition step as described above. Hence, the deposition of both anti-abrasion coating and antireflective coating is easy to perform, while obtaining an optical article having an improved critical temperature and a better resistance to scratching and crazing.

The invention also relates to a process for manufacturing an optical article, such as defined above, comprising at least the following:

(a) providing an optical article comprising a transparent substrate with a front main face and with a rear main face;
(b) depositing on at least one of the main faces, a multilayered interferential coating comprising at least one layer having a high refractive (HI layer) and at least one layer having a low refractive index (LI layer), said at least two layers being formed by depositing one organic precursor or a mixture of organic precursors by vacuum physical vapor deposition under a beam of ionized gas composition,

- wherein the ionized gas composition is different during each deposition step of said at least two layers of the multilayered interferential coating, and,
- wherein said depositing is implemented in absence of evaporated inorganic precursors,

so that the refractive index difference between the HI layer and the LI layer is at least 0.1;

(c) recovering said optical article.

Thus, the process according to the invention is therefore much simpler and less expensive than processes in which several inorganic compounds are used or in which an organic compound and an inorganic compound are co-evaporated for forming one layer of an interference coating. In practice, co-evaporation processes are very difficult to implement and difficult to control due to reproducibility problems. Specifically, the respective amounts of organic and inorganic compounds present in the deposited layer vary a lot from one operation to another.

## DETAILED DESCRIPTION OF THE INVENTION AND PREFERRED EMBODIMENTS

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements, possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also unless otherwise indicated, the indication of an interval of values « from X to Y » or "between X to Y", according to the present invention, means as including the values of X and Y.

In the present application, when an optical article comprises one or more coatings onto the surface thereof, the expression "to deposit a layer or a coating onto the article" is intended to mean that a layer or a coating is deposited onto the external (exposed) surface of the outer coating of the article, that is to say its coating which is the most distant from the substrate.

A coating, that is said to be "on" a substrate or deposited "onto" a substrate is defined as a coating, which (i) is positioned above the substrate, (ii) is not necessarily in contact with the substrate, that is to say one or more intermediate coatings may be arranged between the substrate and the coating in question, and (iii) does not necessarily completely cover the substrate (although it preferably completely covers the substrate).

In a preferred embodiment, the coating on a substrate or deposited onto a substrate is in direct contact with this substrate.

When "a layer 1 is lying under a layer 2", it is intended to mean that layer 2 is more distant from the substrate than layer 1.

The multilayered interferential coating according to the invention may be formed on at least one of the main faces of a bare substrate, i.e. an uncoated substrate, or on at least one of the main faces of a substrate already coated with one or more functional coatings, such as an anti-abrasion coating.

As used herein, the rear (or the inner) face of the substrate is intended to mean the face which, when using the article, is the nearest from the wearer's eye. It is generally a concave face. On the contrary, the front face of the substrate, is the face which, when using the article, is the most distant from the wearer's eye. It is generally a convex face.

The optical article prepared according to the present invention is a transparent optical article, preferably a lens or lens blank, and more preferably an ophthalmic lens or lens blank. The optical article may be coated on its convex main side (front side), concave main side (back side), or both sides using the process of the invention.

Generally speaking, the interferential multilayered coating of the optical article according to the invention, which may be an antireflective coating (called hereafter AR coating), may be deposited onto any substrate, and preferably onto organic lens substrates, for example a thermoplastic or thermosetting plastic material.

The substrate of the article according to the invention is preferably an organic eyeglass, for example made of thermoplastic or thermosetting plastic. This substrate may be chosen from the substrates mentioned in patent application WO 2008/062142.

In particular, thermoplastic materials may be selected from, for instance: polyamides, polyimide, polysulfones, polycarbonates and copolymers thereof, poly(ethylene terephtalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof.

Homopolymers of diethylene glycol bis(allyl carbonate) (CR 39®), allylic and (meth)acrylic copolymers, having a refractive index between 1,54 and 1,58, are preferred.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Particularly recommended substrates include those substrates obtained through (co)polymerization of the diethyleneglycol bis-allyl-carbonate, marketed, for example, under the trade name CR-39® by the PPG Industries company (ORMA® lenses, ESSILOR), or through polymerization of the thio(meth)acrylate monomers, such as those described in the application of the French patent FR 2 734 827. The substrates may be obtained through polymerization of the above monomer combinations, or may further comprise mixtures of such polymers and (co)polymers.

Before the multilayered interferential coating is deposited on the substrate, which is optionally coated, for example with an anti-abrasion and/or anti-scratch coating, it is common to subject the surface of said optionally coated substrate to a physical or chemical activation treatment intended to increase the adhesion of said multilayered interferential coating.

This pretreatment is generally carried out under vacuum. It may be carried out through bombardment with energetic and/or reactive species, for example an ion beam (ion pre-cleaning or IPC) or an electron beam, a corona discharge treatment, a glow discharge treatment, a UV treatment or treatment in a vacuum plasma, generally an oxygen or argon plasma. It may also be carried out through an acidic or basic surface treatment and/or a treatment with solvents (water or organic solvent(s)). Several of these treatments may be combined. By virtue of these cleaning treatments, the cleanliness and the reactivity of the surface of the substrate are optimized.

The term "energetic species" (and/or "reactive species") is particularly understood to mean ionic species having an energy ranging from 1 to 300 eV, preferably from 1 to 150 eV, better still from 10 to 150 eV and even better still from 40 to 150 eV. The energetic species may be chemical species, such as ions, radicals, or species such as photons or electrons.

The preferred pre-treatment of the surface of the substrate is an ion bombardment treatment carried out by means of an ion gun, the ions being particles formed from gas atoms from which one or more electrons have been stripped. Argon is preferably used as the ionized gas ($Ar^+$ ions), though oxygen or a mixture of oxygen and argon may also be used, under an acceleration voltage generally ranging from 50 to 200 V, a current density generally contained between 10 and 100 $\mu A/cm^2$ at the activated surface, and generally under a residual pressure in the vacuum chamber possibly ranging from 8x $10^{-5}$ mbar to 5x $10^{-4}$ mbar.

As previously mentioned, the optical article according to the invention comprises at least one face of the transparent substrate with a front main face and with a rear main face, at least one of the main faces being coated with a multilayered interferential coating comprising at least one layer having a high refractive index (HI layer) and at least one layer having a low refractive index (LI layer), said at least two layers being formed by:

- performing a deposition step of one organic precursor or a mixture of organic precursors by vacuum physical vapor deposition under a beam of ionized gas composition,

  o wherein the ionized gas composition is different during each deposition step of said at least two layers of the multilayered interferential coating, and,
  o wherein said depositing is implemented in absence of evaporated inorganic precursors,

  so that the refractive index difference between the HI layer and the LI layer is at least 0.1.

Especially, the refractive index difference between one HI layer and one LI layer of said multilayered interferential coating is at least 0.15, preferably at least 0.2, in particular at least 0.25 and typically at least 0.3.

The multilayered interferential coating may be any interference coating conventionally used in the field of optics, in particular ophthalmic optic, provided that it contains at least one LI layer and at least one HI layer formed by depositing, under an ion beam, activated species issued from at least an organic precursor, preferably a hydride of silicon, in gaseous form and that it does not contain inorganic precursors.

For instance, the multilayered interferential coating may be, but not limited to, an antireflection coating, a reflective (mirror) coating, an infrared filter or an ultraviolet filter, but is preferably an antireflection coating.

According to the invention, an antireflection coating is a coating, deposited on the surface of an article, which improves the antireflection properties of the final article. It reduces the reflection of light at the article/air interface over a relatively broad portion of the visible spectrum.

In the present patent application, in the interference coating of the invention, a high refractive index layer has preferably a refractive index higher than 1.55, more preferably higher than or equal to 1.6, even more preferably higher than or equal to 1.7 and optimally higher than or equal to 1.75. In the interference coating of the invention, a low refractive

index layer has preferably a refractive index lower than or equal to 1.55, more preferably lower than or equal to 1.50 and even more preferably lower than or equal to 1.45. Unless otherwise indicated, the refractive indices to which reference is made in the present invention are expressed at 25°C for a wavelength of 550 nm.

According to the invention, the multilayered interferential coating is obtained by depositing, under an ion beam, activated species originating from at least one organic precursor or mixture of organic precursors, in gaseous form, which preferably comprises in its structure carbon atom(s), oxygen atom(s), metal and/or metalloid atom(s) or mixtures thereof.

Preferably, the organic precursor comprises an organosilicon compound or mixtures of organosilicon compounds.

Non-limiting examples of organic precursor compounds, cyclic or noncyclic, are the following compounds: octamethylcyclotetrasiloxane (OMCTS), decamethylcyclopentasiloxane, dodecamethylcyclohexasiloxane, hexamethyl cyclotrisiloxane, hexamethyldisiloxane (HMDSO), octamethyltrisiloxane, decamethyltetrasiloxane(DMTS), dodecamethylpentasiloxane, tetraethoxysilane, vinyltrimethylsilane, hexamethyldisilazane, hexamethyldisilane, hexamethylcyclotrisilazane, vinylmethyldiethoxysilane, divinyltetramethyldisiloxane, tetramethyldisiloxane., polydimethylsiloxane (PDMS), poly-phenylmethylsiloxane (PPMS) or a tetraalkylsilane such as tetramethylsilane.

Preferably, the organic precursor comprises at least one silicon atom carrying at least one alkyl group, preferably a C1 -C4 group, more preferably at least one silicon atom bearing one or two alkyl groups identical or different, preferably a C1-C4 group, for example a methyl. group.

Preferred organic precursor compounds comprise a Si-O-Si group, preferably a divalent group of formula (3):

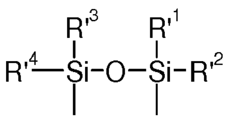

*formula (3)*

wherein R'$^1$ to R'$^4$ independently denote linear or branched alkyl or vinyl groups, preferably C1 -C4,groups, for example a methyl group,, monocyclic or polycyclic aryl groups, hydroxyl or hydrolysable groups. Non-limiting examples of hydrolysable groups include H, halogen (chloro, bromo, iodo ...), alkoxy, aryloxy, acyloxy, - NR$^1$ R$^2$ wherein R$^1$ and R$^2$ independently denote a hydrogen atom, an alkyl or aryl group, and -N(R$^3$)Si where R$^3$ is a hydrogen atom, a linear or branched alkyl group, preferably C1-C4 alkyl group or an aryl, monocyclic or polycyclic group,, preferably monocyclic. The groups with a Si-O-Si bond are not considered as "hydrolyzable groups" within the meaning of the invention. The preferred hydrolyzable group is the hydrogen atom.

According to another embodiment, the organic precursor has the formula:

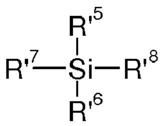

wherein R'$^5$, R'$^6$, R'$^7$, R '$^8$ independently denote hydroxyl groups or hydrolysable groups such as OR groups, wherein R is an alkyl. group.

According to another embodiment of the invention, the organic precursor comprises at least one silicon atom carrying two identical or different alkyl groups, preferably a C1-C4 alkyl group. According to this first embodiment, the organic precursor is preferably a compound of formula (3) wherein R'$^1$ to R'$^4$ independently denote alkyl groups, preferably a C1-C4 alkyl group, for example a methyl group.

Preferably, the one or more silicon atoms of the organic precursor contain no hydrolyzable group or hydroxyl group in this embodiment.

Preferably, the one or more silicon atoms of the organic precursor is preferably bound only to alkyl groups and / or groups having -O- Si or -NH-Si to form an Si-O- Si or Si-NH-Si group. The preferred organic precursor compounds are DMTS, OMCTS and HMDSO.

In an embodiment, precursors are cyclic polysiloxanes of formula (4):

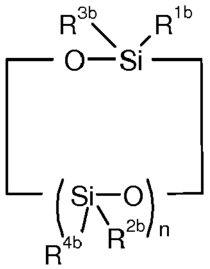

*formula (4)*

where n denotes an integer ranging from 2 to 20, preferably 3 to 8, R1 b to R 4b independently represent linear or branched alkyl groups, preferably C1-4 group (e.g. methyl), vinyl, aryl or a hydrolyzable group. The preferred members of this group are the octa-alkylcyclotétrasiloxanes (n = 3), preferably octamethylcyclotetrasiloxane (OMCTS). In some cases, the layer is derived from a mixture of a number of compounds of formula (4) wherein n can vary within the limits indicated above.

In another embodiment, the organic precursor or mixture of organic precursors, contains in its structure at least one Si-X group, where X is a hydroxy group or a hydrolyzable group chosen from the groups H, halogen, alkoxy, aryloxy, acyloxy, $-NR^1R^2$ where $R^1$ and $R^2$ designate independently a hydrogen atom, an alkyl group or an aryl group, and $-N(R^3)$-Si where $R^3$ designates an alkyl group or an aryl group or a hydrogen atom; at least one carbon atom; at least one hydrogen atom; and, optionally, at least one nitrogen atom and/or at least one oxygen atom. The definition of the groups $-NR^1R^2$ and $-N(R^3)$-Si indicated above naturally excludes compounds such as hexamethyldisilazane.

The organic precursor or mixture of organic precursors preferably contains in its structure at least one Si-H group, i.e. is a silicon hydride. Preferably, the silicon atom of the group Si-X is not bonded to more than two non-hydrolyzable groups such as alkyl or aryl groups.

Among the groups X: the acyloxy groups have the formula $-O-C(O)R^4$ where $R^4$ is a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; the aryloxy and alkoxy groups have the formula $-O-R^5$ where $R^5$ is a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; the halogens are preferably F, Cl, Br or I; the groups X of formula $-NR^1R^2$ may designate an amino group $NH_2$ or an alkylamino, arylamino, dialkylamino or diarylamino group; $R^1$ and $R^2$ independently designate a hydrogen atom, a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; and the groups X of formula $-N(R^3)$-Si are attached to the silicon atom by way of their nitrogen atom and their silicon atom naturally comprises three other substituents, where $R^3$ designates a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups.

The preferred acyloxy group is the acetoxy group. The preferred aryloxy group is the phenoxy group. The preferred halogen is Cl. The preferred alkoxy groups are the methoxy and ethoxy groups.

In an embodiment, the organic precursor or mixture of organic precursors contains at least one nitrogen atom and/or at least one oxygen atom and preferably at least one oxygen atom.

The organic precursor or mixture of organic precursors preferably contains at least one silicon atom bearing at least one preferably C1-C4 alkyl group, better still at least one silicon atom bearing one or two identical or different preferably C1-C4 alkyl groups, and a group X (preferably a hydrogen atom) directly bonded to the silicon atom, X having the meaning indicated above. The preferred alkyl group is the methyl group. The vinyl group may also be used instead of an alkyl group. Preferably, the precursor or mixture of organic precursors comprises at least one Si-C bond and better still the silicon atom of the group Si-X is directly bonded to at least one carbon atom.

Preferably, each silicon atom of the precursor or mixture of organic precursors is not directly bonded to more than two groups X, better still is not directly bonded to more than one group X (preferably a hydrogen atom), and better still, each silicon atom of the precursor or mixture of organic precursors is directly bonded to a single group X (preferably a hydrogen atom). Preferably, the precursor or mixture of organic precursors has a Si/O atomic ratio equal to 1. Preferably, the precursor or mixture of organic precursors has a C/Si atomic ratio $<2$, preferably $\leq 1.8$, better still $\leq 1.6$ and even better still $\leq 1.5$ or $\leq 1.3$ and optimally equal to 1. Again preferably, the precursor or mixture of organic precursors has a C/O atomic ratio equal to 1. According to one embodiment, the precursor or mixture of organic precursors does not

comprise a Si-N group and better still does not comprise any nitrogen atoms.

The silicon atom or atoms of the precursor compound of the multilayered interferential coating are preferably only bonded to alkyl groups, hydrogen and/or groups containing an -O-Si or -NH-Si chain so as to form a Si-O-Si or Si-NH-Si group. In one embodiment, the precursor or mixture of organic precursors contains at least one Si-O-Si-X group or at least one Si-NH-Si-X group, X having the meaning indicated above and preferably representing a hydrogen atom.

The organic precursor or mixture of organic precursors of the multilayered interferential coating preferably contain a Si-O-Si group and more preferably a group of formula:

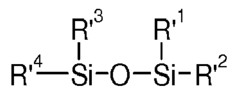

wherein R'1 to R'4 are independently linear or branched alkyl or vinyl groups, monocyclic or polycyclic aryl, hydroxyl groups or hydrolyzable groups.

According to another embodiment, the precursor or mixture of organic precursors may be a cyclic polysiloxane of formula:

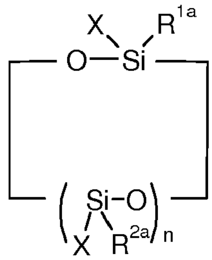

where X has the meaning indicated above and preferably represents a hydrogen atom, n designates an integer ranging from 2 to 20 and preferably from 3 to 8, and $R^{1a}$ and $R^{2a}$ independently represent a preferably C1-C4 alky group (for example the methyl group) or a vinyl or aryl group or a hydrolyzable group. Non-limiting examples of hydrolyzable groups for $R^{1a}$ and $R^{2a}$ are the chloro, bromo, alkoxy, acyloxy, aryloxy and H groups. The most common members belonging to this group are the tetra-, penta- and hexa-alkylcyclotetrasiloxanes, preferably the tetra-, penta- and hexa-methylcyclotetrasiloxanes, 2,4,6,8-tetramethylcyclotetrasiloxane (TMCTS) being the preferred compound.

According to another embodiment, the precursor or mixture of organic precursors may be a linear alkylhydrosiloxane, better still a linear methylhydrosiloxane, such as for example 1,1,1,3,5,7,7,7-octamethyl tetrasiloxane, 1,1,1,3,5,5,5-heptamethyltrisiloxane or 1,1,3,3,5,5-hexamethyl trisiloxane.

Non-limiting examples of cyclic or non cyclic organic precursor compounds, in are the following compounds: 2,4,6,8-tetramethylcyclotetrasiloxane (TMCTS of formula (1)) The tétraéthylcyclotétrasiloxane 2,4,6,8-, 2,4,6, 8-tétraphénylcyclotétrasiloxane the 2,4,6,8-tétraoctylcyclotétrasiloxane the 2,2,4,6,6,8-hexaméthylcyclotétrasiloxane the 2,4,6-trimethylcyclotrisiloxane, cyclotetrasiloxane, 1, 3,5,7,9-pentamethyl cyclopentasiloxane, the hexaméthylcyclohexasiloxane-2,4,6,8,10, 1, 1, 1, 3,5,7 , 7,7-octamethyl cyclotetrasiloxane, 1, 1, 3,3,5,5-hexamethyltrisiloxane, tetramethyldisiloxane, tetraethoxysilane, vinylmethyldiethoxysilane, a hexamethylcyclotrisilazane such as hexamethylcyclotrisilazane 3,4,5,6 or 2, 2,4,4,6,6-hexamethylcyclotrisilazane, 1, 1, 1, 3,5,5,5- heptamethyl trisiloxane, tris (trimethylsiloxy) silane (formula (2)), 1, 1, 3 , 3-tetramethyldisilazane, 1, 2,3,4,5,6,7,8-octamethylcyclotetrasilazane, the nonaméthyl trisilazane, tris (dimethylsilyl) amine, hexamethyldisilazane.

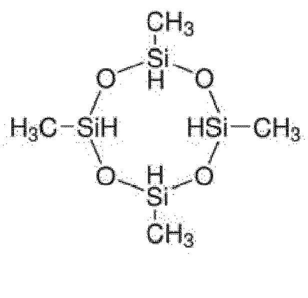 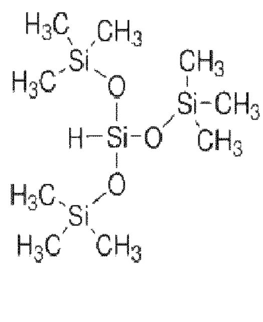

(1) (2)

Preferably, the inventive layers of the invention do not contain a separate phase of metal oxides. Moreover, the HI and LI layer obtained using the organic precursor of the invention is formed by vacuum deposition, consequently it does not include a hydrolyzate of organosilicon compound and therefore differs from the sol-gel coatings obtained by a liquid process.

The duration of the deposition process, the flow rates and pressures are adjusted to obtain the desired coating thickness.

The concentration of each chemical element (Si, O, C, H, N) in the layers of the invention obtained from an organic precursor may be determined using the Rutherford backscattering spectrometry technique (RBS) and elastic recoil detection analysis (ERDA).

In the layers of the invention, the atomic percentage may range

- for carbon atoms: from 8 to 25% and more preferably from 15 to 25%.
- for hydrogen atoms: from 8 to 40% and more preferably from 10 to 20%.
- for silicon atoms: from 5 to 30% and more preferably from 15 to 25%.
- for oxygen atoms: from 20 to 60% and more preferably from 35 to 45%.

According to the invention, the HI and LI layers of the invention formed from organic precursor(s) is(are) not formed from inorganic (mineral) precursor compounds and, in particular, is (are) not formed from precursors having a metal oxide nature.

. In the present application, metalloid oxides are considered to be metal oxides.

According to a preferred embodiment of the invention, the same organic precursor or mixture of organic precursors is used for the deposition step of the at least two layers of said multilayered interferential coating. Most preferably, the same organic precursor is used for the deposition step of the multilayered interferential coating.

The deposition step of the multilayered interferential coating according to the invention comprising at least one HI layer and one LI layer will now be described.

As previously mentioned, the deposition step is performed by using the organic precursor or a mixture of organic precursors described above by vacuum physical vapor deposition (PVD) under a beam of ionized gas composition.

Preferably, the ionized gas composition is obtained from an ion gun.

According to this embodiment, the deposition is carried out in a vacuum chamber comprising an ion gun directed toward the substrates to be coated, which emits, toward said substrates, a beam of positive ions generated in a plasma within the ion gun. Preferably, the ions issued from the ion gun are particles formed from gas atoms from which one or more electrons have been stripped.

Since the multilayered interferential coating is formed by vacuum deposition, it does not contain any silane hydrolysate and therefore differs from sol-gel coatings obtained by liquid processing.

Especially, the ionized gas composition (also named working gas composition) is different during each deposition step of the different layers of the multilayered interferential coating.

In general, the ionized gas composition used during the deposition step of the LI layer comprises oxygen ($O_2$). In an embodiment, it can be a mixture of $O_2$/Ar.

Preferably, the ionized gas composition used during the deposition step of said at least HI layer comprises $N_2$, or a rare gas chosen between Ar, Xe, Kr or a mixture of any of these, typically the ionized gas composition is Ar.

The organic precursor or mixture of organic precursors, is introduced, in a gaseous state into the vacuum chamber, preferably in a direction that crosses the ion beam, and is activated under the effect of the ion gun. In other words, it is preferably not vaporized inside the vacuum chamber. The feed of the precursor or mixture of precursors of the multilayered interferential coating is preferably located a distance away from the exit of the ion gun preferably ranging from 30 to 50 cm.

Without wanting to be limited to any one theory, the inventors think that the plasma of the ion gun projects into a zone located a certain distance in front of the gun, without however reaching the substrates to be coated, and that activation/disassociation of the organic precursor or mixture of organic precursors takes place preferentially in this zone, more generally near the ion gun, and to a lesser extent in the ion gun.

This deposition technique using an ion gun and a gaseous precursor, sometimes referred to as "ion beam deposition", is especially described in patent US 5,508,368.

According to the invention, the ion gun is preferably the only place in the chamber where a plasma is generated.

The ions may, if required, be neutralized before they exit the ion gun. In this case, the bombardment is still considered to be ion bombardment. The ion bombardment causes atomic rearrangement in and a densification of the layer being deposited, tamping it down while it is being formed.

During the implementation of the process according to the invention, the surface to be treated is preferably bombarded by ions with a current density generally comprised between 20 and 1000 $\mu A/cm^2$, preferably between 30 and 500 $\mu A/cm^2$, more preferably between 30 and 200 $\mu A/cm^2$ and typically 50 to 150 $\mu A/cm^2$ at the activated surface

and generally under a residual pressure in the vacuum chamber possibly ranging from $6\times10^{-5}$ mbar to $5\times10^{-4}$ mbar and preferably from $8\times10^{-5}$ mbar to $2\times10^{-4}$ mbar.

The ions of the ion beam, which are preferably issued from an ion gun used during the deposition of the multilayered interferential coating, preferably have an energy ranging from 30 to 200 eV, more preferably from 50 to 150 eV and even more preferably from 90 to 110 eV.

The activated species formed are typically radicals or ions.

The ratio ions of working gas (such as ions from $O_2$ or Ar)/deposited atom (from the precursor) is preferably ranging from 0.1 to 0.5, preferably from 0.14 to 0.45 and the energy dose per atom may be ranging from 5 to 100 eV/atom, preferably from 6 to 70 eV/atom.

The ion/atom ratio is *Ri*/*Ra*

The ion-arrival rate *Ri* in ions/cm$^2$-s is

$$R_i = i_i/1.602\times10^{-19}$$

where *i*; is the ion current density in A/cm$^2$, and $1.602\times10^{-19}$ is the electronic charge in C. (for working gases being singly charged ions (for example $N_2$+, $O_2$+).

The atom arrival rate *Ra* (in atom/cm$^2$-s) from the organic precursor is

$$R_a = 10^{-8}R_Å\times\rho N/(1.66\times10^{-24}\times w)$$

wherein $R_Å$ is the film growth rate in angströms/s, p is the density in g/cm$^3$, N is the number of atoms in the organic precursor to be deposited, w is the atomic weight of the organic precursor and $1.66\times10^{-24}$ is the mass in g of one amu.

Preferably, the flow rate of the gas to be ionized (typically Ar) for forming an HI layer preferably ranges from 2 to 50 sccm, in particular from 5 to 30 sccm and typically from 8 to 20 sccm. The flow rate of the gaz to be ionized for forming LI layer, such as $O_2$ preferably ranges from 5 to 40 sccm, most preferably ranges from 8 to 30 sccm and ranges typically from 10 to 25 sccm.

In general, the precursor or mixture of precursors is also preferably introduced into the vacuum chamber in which articles according to the invention are produced in gaseous form, while controlling its flow rate. Especially, the precursor or mixture of precursor flow rate ranges from 5 to 40 sccm, in particular from 10 to 30 sccm for forming an HI layer and ranges from 20 to 80 sccm, preferably from 30 to 70 sccm and typically from 40 to 60 sccm for forming LI layer

The technique of the invention differs from a deposition by means of a plasma (PECVD for example) in that it involves a bombardment, by means of an ion beam, of the multilayered interferential coating being formed, which beam is preferably emitted by an ion gun.

In addition to the ion bombardment during the deposition, it is possible to carry out a plasma treatment, optionally concomitant with the deposition under ion beam, of the multilayered interferential coating. The layer is preferably deposited without the plasma assistance at the substrate level.

The evaporation of the precursor materials of the multilayered interferential coating, carried out under vacuum, may be achieved using a joule heat source.

In one embodiment of the present invention, the multilayered interferential coating is deposited onto a sub-layer, which is disposed between said substrate and said at least two LI and HI layer. It should be noted that such sub-layer does not belong to the multilayered interferential coating.

As used herein, a sub-layer or adhesion layer is intended to mean a relatively thick coating, used in order to improve the mechanical properties such as the abrasion resistance and/or the scratch resistance of said coating and/or so as to reinforce its adhesion to the substrate or to the underlying coating.

Because of its relatively high thickness, the sub-layer does not generally impact a lot the antireflective optical activity, especially when it has a refractive index close to that of the underlying coating (which is generally the anti-abrasion and anti-scratch coating) or to that of the substrate, if the sub-layer is directly deposited onto the substrate.

The sub-layer should have a thickness that is sufficient for promoting the abrasion resistance of the multilayered interferential coating such as AR coating, but preferably not to such an extent that a light absorption could be caused, which, depending on the sub-layer nature, could significantly reduce the relative transmission factor $T_v$. Its thickness is generally lower than or equal to 500 nm and preferably higher than or equal to 90 nm or 100 nm" more preferably ranges from 150 to 400 nm, better from 150 to 300 nm.

Preferably, said sub-layer is formed by using the above-mentioned deposition step.

The optical article of the invention may be made antistatic by incorporating at least one electrically conductive

layer into the interference coating. The term "antistatic" is understood to mean the property of not storing and/or building up an appreciable electrostatic charge. An article is generally considered to have acceptable antistatic properties when it does not attract and hold dust and small particles after one of its surfaces has been rubbed with an appropriate cloth.

The electrically conductive layer may be located in various places in the multilayered interferential coating, provided that this does not interfere with the antireflection properties of the latter. It may for example be deposited on the underlayer of the interference coating, if an underlayer is present. It is preferably located between two dielectric layers of the interference coating, and/or under a low refractive index layer of the interference coating.

The electrically conductive layer is preferably made from an electrically conductive and highly transparent material. In this case, its thickness preferably ranges from 0.1 to 30 nm, more preferably from 1 to 20 nm comprising preferably at least one metallic oxide chosen between indium tin oxide ($In_2O_3$:Sn, indium oxide doped with Tin called ITO), indium oxyde ($In_2O_3$), and tin oxide ($SnO_2$).

Preferably, all the HI layers and the LI layers of said multilayered interferential coating are formed by using the deposition step as defined above.

In general, said multilayered interferential coating comprises alternate layers of LI layer and HI layer which are adjacent.

Preferably, the antireflective coating of the invention comprises a first layer or superposition of layers consisting in 1, 2 or 3 layers having a refractive index higher than or equal to 1,55 coated with a second layer or superposition of layers consisting in 1 or 2 layers having a refractive index lower than 1,55. Optionally, this second layer or superposition of layers is coated with a third layer or superposition of layers consisting in 1 or 2 layers having a refractive index higher than or equal to 1,55, itself coated with a fourth layer or superposition of layers consisting in 1 or 2 layers having a refractive index lower than 1,55.

In particular, the multilayered interferential coating may comprise at least two layers with a low refractive index (LI) and at least two layers with a high refractive index (HI). Preferably, the layer total number in the multilayered interferential coating is higher than or equal to 3, preferably higher than or equal to 4, and lower than or equal to 7, more preferably lower than or equal to 6, even more preferably lower than or equal to 5, and most preferably equal to 4 layers.

As used herein, a layer of the multilayered interferential coating is defined as having a thickness higher than or equal to 1 nm. Thus, any layer having a thickness lower than 1 nm will not be considered when counting the number of layers in the antireflective coating. As mentioned above, the sub-layer either is not considered when counting the number of layers of the antireflective coating.

According to one preferred embodiment, the multilayered interferential coating of the invention is an antireflection coating comprising, in the deposition order, on the surface of the optionally coated substrate, a layer having a refractive index higher than or equal to 1,55 with a thickness of from 10 to 45 nm, preferably from 20 to 25 nm, a layer having a refractive index lower than 1,50 with a thickness of from 5 to 35 nm, preferably 10 to 25 nm, a layer having a refractive index higher than 1,6 with a thickness of from 60 to 120 nm, preferably from 90 to 100 nm, optionally an electrically conductive layer with a thickness of from 3 to 10 nm, and a layer having a refractive index lower than 1,5, with a thickness of from 60 to 120 nm, preferably from 90 to 100 nm.

Preferably, the average reflection factor in the visible domain (400-700 nm) of an optical article coated with multilayered interferential coating according to the invention, denoted $R_m$, is lower than 2.5% per face, preferably lower than 2% per face and even more preferably lower than 1.5% per face of the article. In one optimal embodiment, the article comprises a substrate, the two main surfaces of which are coated with multilayered interferential coating according to the invention, and has a total $R_m$ value (cumulative reflection due to the two faces) lower than 1%. Means for achieving such $R_m$ values are known to those skilled in the art.

The light reflection factor $R_v$ of multilayered interferential coating according to the invention is lower than 2.5% per face, preferably lower than 2% per face, more preferably lower than 1.5% per face of the article, even more preferably $\leq$1.0%.

In the present application, the "average reflection factor" $R_m$ (average of the spectral reflection over the entire visible spectrum between 400 and 700 nm) and the "light reflection factor" $R_v$ are such as defined in standard ISO 13666:1998 and measured according to standard ISO 8980-4.

The color coordinates of the article of the invention in the CIE L*a*b* color space are calculated between 380 and 780 nm with respect to illuminant D65 and the observer (angle of incidence: 10°). The interference coatings produced are not limited with regard to their hue angle. However, their hue angle h preferably ranges from 220 to 270°, thereby producing a coating having a residual blue color in reflection, and their chroma C* is preferably lower than 15 and more preferably lower than 10.

The multilayered interferential coatings of the invention have elongations at break higher than those of inorganic layers and may therefore undergo deformations without cracking. Thus, the article according to the invention has a greater resistance to bending, as is demonstrated in the experimental section.

The critical temperature of a coated article according to the invention is preferably higher than or equal to 80°C, better still higher than or equal to 90°C and even better still higher than or equal to 100°C and typically higher than or

equal to 115°C. In the present application, the critical temperature of an optical article or a coating is defined as being the temperature from which cracks are observed to appear in the stack present on the surface of the substrate, this resulting in degradation of the coating.

Because of its improved thermomechanical properties, the multilayered interferential coating may especially be applied to a single face of a semi-finished lens, generally its front face, the other face of this lens still needing to be machined and treated. The stack present on the front face of the lens will not be degraded by temperature rises due to treatments to which the back face is subjected when coatings deposited on this back face are hardened or by any other action liable to increase the temperature of the lens.

In some applications, it is preferable for the main surface of the substrate to be coated with one or more functional coatings prior to the deposition of the multilayer interferential coating. These functional coatings, which are conventionally used in optics, may, without limitation, be a primer layer for improving the shock-resistance and/or adhesion of subsequent layers in the final product, an anti-abrasion and/or anti-scratch coating, a polarized coating, a photochromic coating or a tinted coating, and may in particular be a primer layer coated with an anti-abrasion and/or anti-scratch layer. The latter two coatings are described in greater detail in the patent applications WO 2008/015364 and WO 2010/109154.

Especially, said multilayered interferential coating is preferably formed on an anti-abrasion coating and/or anti-scratch coating deposited previously onto at least one of the faces of the substrate. The multilayered interferential coating is, in general, in direct contact with said anti-abrasion coating and/or anti-scratch coating.

According to one embodiment according to the invention, the anti-abrasion coating and/or anti-scratch coating may be based for instance on epoxysilane hydrolysates containing at least two and preferably at least three hydrolyzable groups, bonded to the silicon atom. The hydrolyzable groups are preferably alkoxysilane groups.

According to another embodiment of the invention, the anti-abrasion coating and/or anti-scratch coating may be obtained by using the deposition step as defined above, wherein

- said deposition step is performed by depositing one organic precursor or a mixture of organic precursors by vacuum physical vapor deposition under a beam of ionized gas composition,
- said deposition step is implemented in absence of evaporated inorganic precursors.

Thus, all the characteristics required for the deposition step and described for the optical article apply by analogy for the definition of the anti-abrasion coating and/or anti-scratch coating according to the invention.

In general, the ionized gas composition used during the deposition step of the LI layer comprises oxygen ($O_2$).

Preferably, the ionized gas composition used during the deposition step of said at least HI layer comprises $N_2$, a rare gas chosen between Ar, Xe, Kr or a mixture thereof, typically the ionized gas composition is Ar.

Especially, the organic precursor or mixture of organic precursors may comprise carbon atom(s), oxygen atom(s), metal and metalloid atom(s) or mixtures thereof.

Preferably, the organic precursor comprises an organosilicon compound or mixtures of organosilicon compounds.

For instance, the organosilicon compound has the formula:

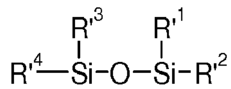

wherein R'1 to R'4 are independently linear or branched alkyl or vinyl groups, monocyclic or polycyclic aryl, hydroxyl groups or hydrolyzable groups.

The optical article according to the invention may also comprise an antifog coating or a hydrophobic external coating deposited on the multilayered interferential coating according to the invention and capable of modifying its surface properties, such as a hydrophobic and/or oleophobic coating (also called a topcoat or anti-smudge coating in the present application). Its thickness is in general smaller than or equal to 10 nm, preferably from 1 to 10 nm and better still from 1 to 5 nm.

Antifog coatings are described in WO2011080472.

Hydrophobic coatings are described for example in patent application WO 2009/047426. The hydrophobic external coating may be a monolayer or multilayer coating and is preferably a monolayer coating. In the case where the coating comprises a plurality of layers, the multilayered interferential coating makes direct contact with the internal layer of the hydrophobic coating B, i.e. the layer of the coating hydrophobic closest the substrate in the stacking order.

The hydrophobic and/or oleophobic coatings are defined as coatings the static contact angle with deionized water of which is greater than or equal to 75°, preferably greater than or equal to 90°, and better still greater than or equal to 100°. The static contact angle may be determined using the liquid droplet method, in which a liquid droplet having a diameter smaller than 2 mm is deposited gently on a solid nonabsorbent surface and the angle at the interface

between the liquid and the solid surface is measured.

The hydrophobic and/or oleophobic coating is preferably an organic coating, preferably comprising at least one fluorocompound, better still at least one compound of silane and/or silazane nature bearing one or more fluorinated groups (the compound named fluorosilane or fluorosilazane), and in particular fluorinated or even perfluorinated hydrocarbon groups.

It may be obtained by deposition of a fluorosilane or fluorosilazane precursor preferably containing at least two hydrolyzable groups per molecule. The fluorosilane precursors preferably contain fluoro polyether groups and more preferably per-fluoro polyether groups. These fluorosilanes are well known and are described, *inter alia,* in patents US 5,081,192, US 5,763,061, US 6,183, 872, US 5,739, 639, US 5,922,787, US 6,337,235, US 6,277,485 and EP 0933377. Such compounds are capable of undergoing, when they are deposited on a surface, polymerization and/or cross-linking reactions directly or after hydrolysis.

The external hydrophobic and/or oleophobic coating preferably has a surface energy of 14 $mJ/m^2$ or less, more preferably of 13 $mJ/m^2$ or less and even more preferably of 12 $mL/m^2$ or less. The surface energy is calculated using the Owens-Wendt method described in the article: "Estimation of the surface force energy of polymers" Owens D. K., Wendt R. G. (1969), J. Appl. Polym. Sci., 13, 1741-1747.

Compounds that may be used to obtain such anti-smudge coatings are described in patents US 6 183 872.and JP3763538 B1.

Commercially available compositions allowing hydrophobic and/or oleophobic coatings to be prepared include KY130® and KP 801M® sold by Shin-Etsu Chemical, and the composition OPTOOL DSX® (a fluorinated resin comprising perfluoropropylene groups) sold by Daikin Industries. The composition OPTOOL DSX® is the preferred anti-smudge coating composition.

The invention also relates to a process for manufacturing an optical article, such as defined above, comprising at least the following steps:

(a) providing an optical article comprising a transparent substrate with a front main face and with a rear main face;
(b) depositing on at least one of the main faces, a multilayered interferential coating comprising at least one layer having a high refractive index (HI layer) and at least one layer having a low refractive index (LI layer), said at least two layers being formed by depositing one organic precursor or a mixture of organic precursors by vacuum physical vapor deposition under a beam of ionized gas composition,

- wherein the ionized gas composition is different during each deposition step of said at least two layers of the multilayered interferential coating, and,
- wherein said depositing is implemented in absence of evaporated inorganic precursors,

so that the refractive index difference between the HI layer and the LI layer is at least 0.1;
(c) recovering said optical article.

The characteristics described above for the deposition step of the multilayered of the optical article apply by analogy for the process according to the invention.

The invention is illustrated in a non-limiting way by the following examples. Unless otherwise indicated, refractive indices are given for a wavelength of 550 nm and T = 20-25°C.

In the examples, the critical temperature is measured as described in WO2010109154.

EXAMPLE

1. General procedures

The article employed in the example comprised a 65 mm-diameter ORMA® ESSILOR lens substrate with a power of -2.00 diopters and a thickness of 1.2 mm, coated on its convex face with the anti-shock primer coating and the anti-scratch and anti-abrasion coating (hard coat) disclosed in the experimental section of the patent application WO 2010/109154, with an antireflection coating according to the invention and with an anti-smudge coating (Optool DSX) (2-3 nm thickness).

The vacuum deposition reactor was a BALZER 760 or SATIS 1200 coating machine, with a KRI EH 1000 F ion gun (from Kaufman & Robinson Inc.) for use in the preliminary phase of (IPC) preparation of the surface of the substrate by argon ion bombardment and in the ion-assisted deposition (IAD) of the AR coating, and with a system for introducing vaporized liquid, which system was used when the organic precursor compound of the AR coating was a liquid under standard temperature and pressure conditions (the case of OMCTS). This system comprises a reservoir containing the liquid organic precursor compound of the AR coating, resistive heaters for heating the reservoir, tubes

connecting the reservoir of liquid precursor to the vacuum deposition machine, and a vapor flowmeter from MKS (MKS1150C), raised to a temperature of 30-150°C during its use, depending on the flow rate of the vaporized precursor, which preferably varied from 10 to 50 sccm. The precursor vapor exited from a tube inside the machine, at a distance of about 30 cm from the ion gun. Flows of oxygen and of argon were introduced into the ion gun.

The AR coating according to the invention was formed by evaporation under ion bombardment of OMCTS compound.

The thickness of the deposited layers was controlled in real time by means of a quartz microbalance. Unless otherwise indicated, the thicknesses mentioned are physical thicknesses.

## 2. Operating modes

The method used to produce optical article according to the invention comprised introducing the substrate coated with the primer coating and the anti-abrasion coating defined above into the vacuum deposition chamber; a step of preheating the vaporizer, tubes and the vapor flowmeter to the chosen temperature (~ 20 min); a primary pumping step; then a secondary pumping step lasting 400 seconds and allowing a secondary vacuum to be obtained (~ 2x $10^{-5}$ mbar, pressure read from a Bayard-Alpert gauge); a step of activating the surface of the substrate with a beam of argon ions (IPC: 1 minute, 100 V, 1 A, the ion gun being stopped at the end of this step); then deposition by vacuum physical vapor deposition the followings HI and LI layers from the substrate with the specific experimental conditions (table 1):

Table 1

| | Flow rate of the OMCTS | Flow rate of the Ar | Flow rate of the $O_2$ |
|---|---|---|---|
| 1 HI layer | 20 sccm | 10 sccm | - |
| 2 LI layer | 50 sccm | - | 20 sccm |
| 3 HI layer | 20 sccm | 10 sccm | - |
| 4 LI layer | 50 sccm | - | 20 sccm |

Fore each layer deposition step, Ion gun is started again with the desired gas to be ionized (Ar or $O_2$) (As an option, the ion gun could be working during all deposition and just changing the gas at each deposition step).

The desired anode current (3 A) was input and the OMCTS compound was introduced into the chamber (flow rate set to 20 or 50 sccm).

The OMCTS compound supply was stopped once the desired thickness had been obtained, then the ion gun was turned off.

## 3. Characterizations

The following AR stack is obtained (table 2):

Table 2

| | Layer | Thickness | Refractive index |
|---|---|---|---|
| 1 | HI layer | 25 nm | 1.75 |
| 2 | LI layer | 19 nm | 1.45 |
| 3 | HI layer | 94 nm | 1.75 |
| 4 | LI layer | 96 nm | 1.45 |

This AR stack has a Chroma C* of 9.5, a hue value h° of 239°, a light reflection factor $R_v$ of 0.97%, an average reflection factor" Rm of 1.10% and a critical temperature at 1 day of 120°C. at an angle of incidence of 15°.

In addition, the Applicant has found that this AR stack according to the above example has an improved strain to failure, as seen in a bending test as described in WO2013098531, as well as an improved heat resistance, when compared to conventional inorganic AR coating.

**Claims**

1. An optical article comprising a transparent substrate with a front main face and with a rear main face, at least one of the main faces being coated with a multilayered interferential coating comprising at least one layer having a high refractive index (HI layer) and at least one layer having a low refractive index (LI layer), said at least two layers being formed by :

   - depositing one organic precursor or a mixture of organic precursors by vacuum physical vapor deposition under a beam of ionized gas composition,

     o wherein the ionized gas composition is different during each deposition step of said at least two layers of the multilayered interferential coating, and,
     o wherein said depositing is implemented in absence of evaporated inorganic precursors,

   so that the refractive index difference between the HI layer and the LI layer is at least 0.1.

2. The optical article according to claim 1, wherein all the HI layers and the LI layers of said multilayered interferential coating are formed by using the deposition step as defined in claim 1.

3. The optical article according to claim 1 or claim 2, wherein said multilayered interferential coating comprises alternate layers of LI layer and HI layer which are adjacent.

4. The optical article according to any one of the preceding claims, wherein the refractive index difference between one HI layer and one LI layer is at least 0.15, preferably at least 0.2, in particular at least 0.25 and typically at least 0.3.

5. The optical article according to any one of the preceding claims, wherein the at least organic precursor comprises an organosilicon compound or mixtures of organosilicon compounds.

6. The optical article according to claim 5, wherein the organosilicon compound has the formula :

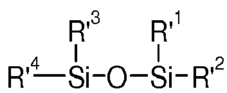

   wherein R'1 to R'4 are independently linear or branched alkyl or vinyl groups, monocyclic or polycyclic aryl, hydroxyl groups or hydrolyzable groups.

7. The optical article according to any one of the preceding claims, wherein the same organic precursor or mixture of organic precursors is used for the deposition step of the at least two layers of said multilayered interferential coating, preferably the same organic precursor is used for the deposition step.

8. The optical article according to any one of the preceding claims, wherein the ionized gas composition is emitted from an ion gun.

9. The optical article according to any one of the preceding claims, wherein the ionized gas composition used during the deposition step of said at least LI layer comprises oxygen.

10. The optical article according to any one of the preceding claims, wherein the ionized gas composition used during the deposition step of said at least HI layer comprises $N_2$, a rare gas chosen between Ar, Xe, Kr or a mixture therefore, preferably the ionized gas composition is Ar.

11. The optical article according to any one of the preceding claims, wherein said multilayered interferential coating comprises a sub-layer disposed between said substrate and said at least two LI and HI layer, said sub-layer being formed by using the deposition step as defined in claim 1.

12. The optical article according to any one of the preceding claims, wherein said multilayered interferential coating is an Anti-Reflective (AR) coating.

**13.** The optical article according to claim 12, comprising a hard coat which is disposed between said substrate and said AR coating, said hard coat being formed by using the deposition step as defined in claims 1, 5 to 8,

- said deposition step being performed by depositing one organic precursor or a mixture of organic precursors by vacuum physical vapor deposition under a beam of ionized gas composition,

o wherein the ionized gas composition is different during each deposition step of said at least two layers of the multilayered interferential coating, and,
o wherein said depositing is implemented in absence of evaporated inorganic precursors.

**14.** The optical article according to any one of the preceding claims, wherein the HI layer is a layer having a refractive index higher than 1.55 and the LI layer is a layer having a refractive index lower than or equal to 1.55.

**15.** The optical article according to any one of the preceding claims, wherein said optical article is an ophthalmic lens.

**16.** A process for manufacturing an optical article according to any one of claims 1 to 15" comprising at least the following:

(a) providing an optical article comprising a transparent substrate with a front main face and with a rear main face;
(b) depositing on at least one of the main faces, a multilayered interferential coating comprising at least one layer having a high refractive index (HI layer) and at least one layer having a low refractive index (LI layer), said at least two layers being formed by depositing one organic precursor or a mixture of organic precursors by vacuum physical vapor deposition under a beam of ionized gas composition,

- wherein the ionized gas composition is different during each deposition step of said at least two layers of the multilayered interferential coating, and,
- wherein said depositing is implemented in absence of evaporated inorganic precursors,

so that the refractive index difference between the HI layer and the LI layer is at least 0.1;
(c) recovering said optical article.

**17.** A process according to claim 16, wherein the HI layer is a layer having a refractive index higher than 1.55 and the LI layer is a layer having a refractive index lower than or equal to 1.55.

Europäisches Patentamt
European Patent Office
Office européen des brevets

# EUROPEAN SEARCH REPORT

Application Number
EP 15 30 7122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/090521 A1 (NAKAJIMA TATSUJI [JP] ET AL) 11 July 2002 (2002-07-11)<br>* page 11; example 6 *<br>* figure 1 *<br>----- | 1-17 | INV.<br>G02B1/111 |
| A,D | EP 1 306 695 A2 (HOYA CORP [JP]) 2 May 2003 (2003-05-02)<br>* claim 22 *<br>----- | 1-17 | |

TECHNICAL FIELDS SEARCHED (IPC)

G02B
G02C

The present search report has been drawn up for all claims

2

| Place of search | Date of completion of the search | Examiner |
|---|---|---|
| Munich | 21 June 2016 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 30 7122

This annex lists the patent family members relating to the patent documents cited in the above-mentioned European search report. The members are as contained in the European Patent Office EDP file on The European Patent Office is in no way liable for these particulars which are merely given for the purpose of information.

21-06-2016

| Patent document cited in search report | Publication date | Patent family member(s) | Publication date |
|---|---|---|---|
| US 2002090521 A1 | 11-07-2002 | US 2002090521 A1 | 11-07-2002 |
| | | US 2004018362 A1 | 29-01-2004 |
| EP 1306695 A2 | 02-05-2003 | AT 484764 T | 15-10-2010 |
| | | AU 2002301541 B2 | 28-04-2005 |
| | | CA 2408113 A1 | 25-04-2003 |
| | | CN 1414398 A | 30-04-2003 |
| | | EP 1306695 A2 | 02-05-2003 |
| | | EP 2249187 A1 | 10-11-2010 |
| | | ES 2351435 T3 | 04-02-2011 |
| | | HU 0203631 A2 | 28-06-2003 |
| | | KR 20030033938 A | 01-05-2003 |
| | | TW 571114 B | 11-01-2004 |
| | | US 2003198818 A1 | 23-10-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1306695 A
- EP 1433809 A
- WO 2015166144 A
- WO 2008062142 A
- FR 2734827
- US 5508368 A
- WO 2008015364 A
- WO 2010109154 A
- WO 2011080472 A
- WO 2009047426 A
- US 5081192 A
- US 5763061 A
- US 6183872 A
- US 5739639 A
- US 5922787 A
- US 6337235 B
- US 6277485 B
- EP 0933377 A
- US 6183872 B
- JP 3763538 B
- WO 2013098531 A


### Non-patent literature cited in the description


- **OWENS D. K. ; WENDT R. G.** Estimation of the surface force energy of polymers. *J. Appl. Polym. Sci.,* 1969, vol. 13, 1741-1747